(19) Europäisches Patentamt
European Patent Office
Office européen des brevets

(11) Publication number: 0 212 852 A2

# (12) EUROPEAN PATENT APPLICATION

(21) Application number: 86305570.3

(22) Date of filing: 18.07.86

(30) Priority: 18.07.85 IT 2163385

(43) Date of publication of application: 04.03.87 Bulletin 87/10

(84) Designated Contracting States: AT BE CH DE FR GB LI NL SE

(51) Int. Cl.4: C09J 3/16 , C08G 59/54

(71) Applicant: A.TE.CA. S.r.l.
31, Foro Buonaparte
Milan(IT)

(72) Inventor: Federici, Franco
49, Viale Stelvio
I-21052 Busto Arsizio Varese(IT)
Inventor: Galbiati, Carlo
3, Via A.Costa
I-28100 Novara(IT)
Inventor: Venchiarutti, Diego
17, Via Nazario Sauro
I-20030 Bovisio Masciago Milan(IT)
Inventor: Turco, Pietro
13, Via Venezia
I-21052 Busto Arsizio Varese(IT)

(74) Representative: Whalley, Kevin et al
MARKS & CLERK 57/60 Lincoln's Inn Fields
London WC2A 3LS(GB)

## (54) Two-component epoxy base adhesive composition.

(57) A two-component adhesive compositiion including:

A) an epoxy resin or mixture of epoxy resins having an epoxy oxygen equivalent weight of from 180 to 250, and

B) a hardener including a polyaminoimidazoline having an amine number of from 200 to 600.

The epoxy resin and the polyaminoimidazoline can be added with mineral fillers such as silica, talc, quartz, aluminium silicate, calcium carbonate, and titanium dioxide.

EP 0 212 852 A2

Xerox Copy Centre

# TWO-COMPONENT EPOXY BASE ADHESIVE COMPOSITION

The present invention refers to a two-component epoxy base adhesive composition.

More particularly, the present invention refers to two-component epoxy based adhesive composition specifically suited to be used in glueing together metals and polymeric compounds and materials with or without surface treatment.

Resins containing epoxy radicals, generally called epoxy resins, are well known in the art. Typical epoxy resins are those made by the reaction of epichlorohydrin with bisphenol A in the presence of a sufficient quantity of alkali, such as to maintain the reaction mixture substantially neutral, and at high temperatures, for example in the range of 50° to 150°C. These resins are polyethers, or more particularly mixtures of polyethers, which are used in the adhesives field.

Known adhesives, however, are subject to some limitations that do not make them suitable to be used in all fields of application, for example in bonding where there is required a high level of resistance to extreme temperature changes, even after several aging cycles.

There is great demand in industry, and in particular in the aviation industry, for adhesives capable of withstanding high and low temperatures as well as different aging cycles, such as saline fogs, humidistat, etc.

We have now discovered an adhesive exhibiting the above requirements, which is the subject of the present invention.

The present invention provides a two-component epoxy base adhesive composition, composed of

A) an epoxy resin or a mixture of epoxy resins with an epoxy oxygen equivalent weight in the range from 150 to 250; and

B) a hardener including a polyaminoimidazoline having an amine number in the range from 200 to 600.

In the adhesive composition of the present invention the weight ratio between the epoxy resin and the hardener can vary from 1 to 0.1, more preferably from 0.5 to 0.2

Both the epoxy resin and the hardener can preferably be added with inorganic fillers.

The epoxy resin can be represented by the following formula

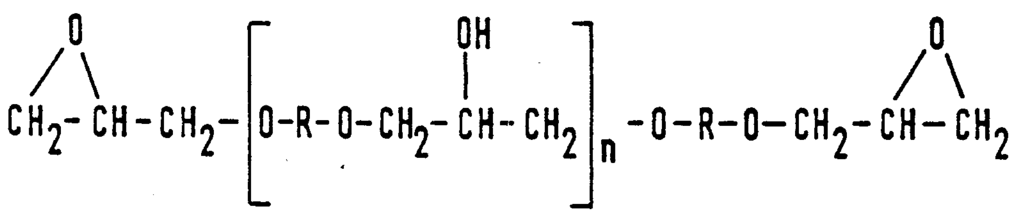

where R is an aromatic or alkyl-aromatic bivalent radical and n is zero or an integer from 1 to 7.

As above mentioned, typical epoxy resins are those produced by the reaction of epichlorohydrin with bisphenol A; the latter can be substituted by other polyhydroxylic phenols such as resorcinol, bis-(4-hydroxy-phenyl)-1, 1-isobutane, and various tris-phenols and epichlorohydrin by other compounds that can operate as reactive equivalent sources of epoxy radicals.

These resins are prepared following well known techniques, as described in the art, in the presence of a base such as, by way of example, sodium hydroxide, and at high temperatures from 50° to 150°C. The molar ratio between epichlorohydrin and bisphenol A can vary within a wide range of values, from 10/1 to 1/10. This ensures that the resin molecular weight and therefore the value of n (as defined above) varies as this ratio varies. By way of example, when the epichlorohydrin/bisphenol A molar ratio is 1.1/1, almost pure diglycidyl-ether (n = o) is obtained; when this ratio is reduced, the resulting product molecular weight is increased. In particular, when the molar ratio of epichlorohydrin/bisphenol A employed is from 3/1 to 10/1, resins with average molecular weights ranging from 450 to 350 are obtained.

It is usefui to employ epoxy resins of a sufficiently low molecular weight in adhesive compounds as they have a low viscosity at room tempertures and it is therefore easier to mix them with inorganic fillers.

Epoxy resins having an equivalent epoxy oxygen weight from 150 to 250, and preferably from 180 to 200, are those preferred for preparing the adhesive compositions of the invention.

Polyaminoimidazolines ae well known in the art; they are obtained through the reaction of dimeric fatty acids, with an average molecular weight of about 500-600, with a polyamine, in the presence of a product azeotropizing the reaction water and at a temperature from 100° to 250°C. Suitable polyamines are diethylenetriamine, triethylenetetramine, and tetraethylenepentamine. Toluene or xylene can be suitably used as a water azeotropizing product.

The polyaminoimidazoline amine number is determined by titration with 0.5N hydrochloric acid. Polyaminoimidazolines having an amine number in the range from 360 to 440 are preferred for preparing the adhesive compositions of the invention.

Inorganic fillers can be added to the polyaminoimidazoline and to the epoxy resin. The addition of fillers not only has an effect on the resin overall cost but also allows dissipation of the heat of reaction during hardening and to reduce the volume decrease between the non-hardened and the hardened adhesive with a resulting tension reduction and an improved junction resistance.

Inorganic fillers can be either metallic or mineral. Suitable metallic fillers are aluminium, copper, and steel. Suitable mineral fillers are calcium carbonate, aluminium silicate, titanium dioxide, talc, quartz, and silica.

The invention will be further described with reference to the following illustrative Examples.

EXAMPLE1

COMPONENT A

One part by weight of an epoxy resin of a diglycyl-ether of bisphenol A, whose epoxy oxygen equivalent weight is 180, was mixed with:

-0.3 parts by weight of rutile titanium dioxide;

-0.3 parts by weight of micronized talc powder; and

-0.03 parts by weight of colloidal silica.

The thus obtained mixture had a HBT viscosity of about 1,100,000 m Pa.s at 1 r.p.m. and of about 340,000 m Pa.s at 5 r.p.m. with a pseudo elasticity index of 3.2.

COMPONENT B

One part by weight of polyaminoimidazoline having an amine number of 400 and obtained from dimeric fatty acids having an average molecular weight of 570, and from triethylenetetramine, was mixed with:

-0.2 parts by weight of micronized talc powder;

-0.15 parts by weight of powdered aluminium; and

-0.05 parts by weight of colloidal silica.

The thus obtained mixture had a HBT viscosity of about 1,400,000 m. Pa.s at 1 r.p.m. and of about 500,000 m. Pa.s at 5 r.p.m., with a pseudo elasticity index of 2.8.

ADHESIVE COMPOSITION

The following compositions were prepared using the two components A and B:

| | Parts by weight of components | |
|---|---|---|
| | A | B |
| Composition 1 | 1 | 0.35 |
| Composition 2 | 1 | 0.46 |
| Composition 3 | 1 | 0.56 |

Various properties of the above compositions were evaluated, and the results obtained are given in the following Table.

| PROPERTY | UNITS | COMPOSITION | | |
|---|---|---|---|---|
| | | 1 | 2 | 3 |
| - HBT viscosity at 23°C 1 rev/min (rpm) (1) | m Pa.s | 1,600,000 | 1,180,000 | 1,120,000 |
| - HBT viscosity at 23°C 5 rev/min (rpm) | m Pa.s | 380,000 | 390,000 | 400,000 |
| - PSEUDO-PLASTICITY INDEX (2) | - | 3.5 | 3.03 | 3 |
| - SPREADING TIME (3) | hours | 2 | 2 | 2 |
| - SHORE 'A' HARDNESS (4) | SHORE A degrees | | | |
| - after 48 hours at 23°C | " " | 38 | 98 | 98 |
| - after 15 min. at 80°C | " " | 99 | 99 | 99 |
| - after 1 hour at 80°C | " " | 99 | 99 | 99 |
| - after 15 min at 140°C | " " | 87 | 94 | 97 |
| TENSILE STRENGTH ON ALUMINIUM ALLOY SPECIMENS (5) | | | | |
| a + 23°C | $Kg/cm^2$ | 171 | 171 | 185 |
| a + 82°C | " " | 179 | 154 | 189 |
| a - 55°C | " " | 177 | 174 | 183 |

| PROPERTY | UNITS | COMPOSITION | | |
|---|---|---|---|---|
| | | 1 | 2 | 3 |
| TENSILE STRENGTH AFTER AGING IN SALINE FOG CONTAINING 5% NaCl at 23°C (6) | | | | |
| - initial values | $Kg/cm^2$ | 171 | 171 | 185 |
| - after 400 hours | " " | 191 | 177 | 182 |
| - after 700 hours | " " | 166 | 177 | 193 |
| - after 1000 hours | " " | 178 | 167 | 186 |
| - TENSILE STRENGTH AFTER HUMIDISTAT AGING AT 40°C and 100% RELATIVE HUMIDITY (7) | | | | |
| - after 400 hours | $Kg/cm^2$ | 170 | 170 | 194 |
| - after 1000 hours | " " | 150 | 144 | 171 |
| - STRENGTH IN WATER AT 82°C (8) | | | | |
| - after 5 days | $Kg/cm^2$ | 167 | 147 | 165 |
| - after 10 days | " " | 169 | 145 | 158 |
| - after 25 days | " " | 166 | 133 | 125 |
| - after 50 days | " " | 165 | 117 | 123 |

(1) HBT viscosity is measured as indicated in ASTM Standard-D2556.

(2) Pseudo-plasticity index is determined as indicated in ASTM Standard-D2556, Parag.5 -Note.

(3) The spreading time is determined as indicated in ASTM Standard-D1338.

(4) Shore hardness is determined as indicated by SHORE A standard.

(5) For tensile strength testing, the adhesive compound is applied on Alclad 2024 aluminium alloy specimen, primer coated with an epoxy-phenolic resin (BR 127) manufactured by American Cyanamid Co., hardened at 140°C for 1 hour. Tensile strength is measured following Federal Specification MMM-A-132-A and ASTM Standard D1002.

(6) After aging in a saline fog, strength is determined in accordance with ASTM Standards B117 and D1002.

(7) After humidistat aging, strength is determined in accordance with Federal Specification MMM-A-132 A and ASTM Standard D1002.

(8) Resistance to water at 82°C is determined in accordance with ASTM Standard D1002, after the specimens hav been completely immersed in water at 82°C for the specified times.

## Claims

1. A two-component epoxy base adhesive composition, characterized in that the components thereof are:

A) an epoxy resin or a mixture of epoxy resins with an epoxy oxygen equivalent weight of from 150 to 250; and

B) a hardener including a polyaminoimidazoline having an amine number of from 200 to 600.

2. A two-component adhesive composition as claimed in claim 1, characterized in that the weight ratio between the epoxy resin and the hardener is from 1.0 to 0.1.

3. A two-component adhesive composition as claimed in claim 2, characterized in that the weight ratio between the epoxy resin and the hardener is from 0.5 to 0.2.

4. A two-component adhesive composition as claimed in any of claims 1 to 3, characterized in that the epoxy resin is added with one or more organic fillers.

5. A two-component adhesive composition as claimed in any of claims 1 to 4, characterized in that the polyaminoimidazoline is added with one or more inorganic fillers.

6. A two-component adhesive composition as claimed in claim 4 or 5, characterized in that the inorganic additive is metallic or mineral material.

7. A two-component adhesive composition as claimed in claim 6, characterized in that the mineral filler is selected from calcium carbonate, aluminium silicate, titanium dioxide, talc, quartz and silica.

8. A two-component adhesive composition as claimed in any of claims 1 to 7, characterized in that the epoxy resin formula is as follows:

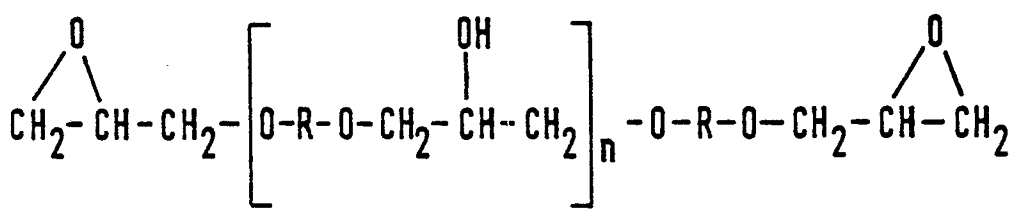

wherein R is an aromatic or alkyl-aromatic bivalent radical and n is zero or an integer from 1 to 7.

9. A two-component adhesive composition as claimed in any of claims 1 to 8, characterized in that the epoxy resin has an epoxy oxygen equivalent weight of from 180 to 200.

10. A two-component adhesive composition as claimed in any of claims 1 to 9, characterized in that the polyaminoimidazoline has an amine number of from 360 to 440.

11. The use of a two-component epoxy based adhesive composition as claimed in any of claims 1 to 10 for glueing together metals and polymeric compounds and materials with or without surface treatment.